# EUROPEAN PATENT APPLICATION

(11) **EP 1 542 116 A1**
(43) Date of publication of application: **15.06.2005**
(21) Application number: 03293106.5
(22) Date of filing: 11.12.2003
(51) Int. Cl.: G06F 1/00, H04L 29/06

(54) **Access multiplexer with remote intrusion detection capability**

(71) Applicant: ALCATEL, 75008 Paris (FR)
(72) Inventor: Miclea, Sorin, 2018 Antwerp (BE); Pelt, Michiel, 1853 Grimbergen (BE); Borghs, Eric Frans Elisa, 2440 Geel (BE)
(74) Representative: Plas, Axel

(57) **Abstract**

The access multiplexer (DSLAM) according to the present invention incorporates a remote host-based intrusion detection system (RHIDS) to detect malicious activity on a large amount of access subscriber connected to the access multiplexer by remotely analyzing systems integrity and statistical behaviors of those access subscribers, and eventually also incorporates a network-based intrusion detection system (NIDS2) to detect malicious activity on all access subscribers (S21, S22 ... S2N) connected to the access multiplexer by analyzing incoming and outgoing traffic for attack signature patterns.

## Description

The present invention relates to intrusion detection which is the art of detecting inappropriate, malicious, incorrect or anomalous activity in a communications network. Intrusion could be any attack from the outside and detection of such attacks is commonly based on statistical anomaly analysis and/or traffic pattern matching. State of the art intrusion detection systems are either classified as host-based intrusion detection systems or network-based intrusion detection systems.

Host-based intrusion detection systems operate on a host to detect malicious activity on that specific host. Typically, a host-based intrusion detector consists of software loaded on the computer or host system to be monitored in order to scan the communications traffic in and out of the computer, check the integrity of the systems files, and watch for suspicious processes. The host intrusion detection software may use all or a selection of system and user log files, and/or may monitor connectivity, processes, sessions, disk usage, and file transfers, and eventually may audit the host system as source of data to detect malicious activity. For instance, a break-in could be detected by noticing a user logged on at a time atypical for that user. Lots of software packages for host intrusion detection are commercially available: for instance the *ADSL modem from Ahead Computers advertised at http:*//*www.ahead-computers.com*/*products*/*2774.htm* is delivered with fully configurable host-based intrusion detection software.

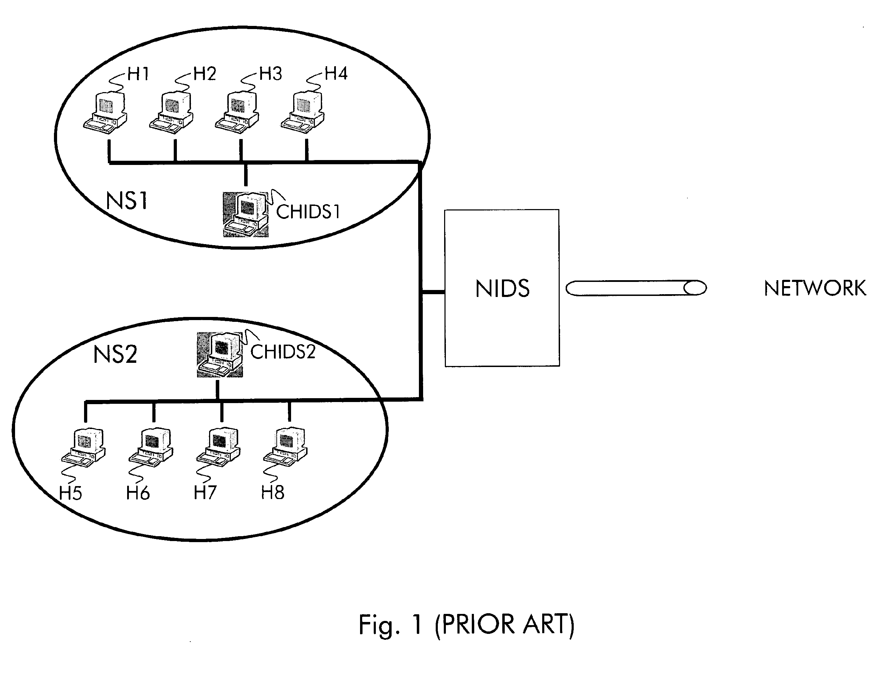

As a variant to host-based intrusion detection systems which have to be loaded onto every host, centralized host intrusion detection systems are known, which serve a relatively low number of computers in a LAN from a single box. Such centralized host intrusion detection systems are illustrated by Fig. 1 where CHIDS1 serves hosts H1, H2, H3 and H4 in a first network segment NS1, and CHIDS2 serves hosts H5, H6, H7 and H8 in a second network segment NS2. A commercially available centralized host-based intrusion detection system is *the Symantec Host Intrusion Detection System 4.0 from Unipalm (advertised at http:*//*www. unipalm.co. uk*/*products*/*e-security*/*symantec*/*host-intrusion-detection-system.cfm).*

Network-based intrusion detection systems operate on network data flows by monitoring the incoming and outgoing traffic of an entire network segment passing through some sensor. The network-based intrusion sensor looks for patterns in the packets that indicate a possible attack, and/or watches for connection attempts to well-known, frequently attacked ports, and/or watches for dangerous or illogical combinations in packet headers. Typically, network intrusion detection systems are incorporated in boxes placed behind the firewalls guarding the enterprise or LAN segment, like NIDS in Fig. 1.

Both host-based intrusion detection and network-based intrusion detection have pro's and con's. Consequently, effective intrusion detection requires the combination of host-based and network-based intrusion detection. *Version 6.0 of Enterasys' Dragon intrusion detection system for instance consists of a host-based intrusion sensor and network-based intrusion sensor, which can be bought separately (see http:*//*boston:internet.com*/*news*/*article.php*/*1 135921).*

The known host-based intrusion detection systems, whether combined or not with network-based intrusion detection systems, operate on a single host or a few hosts in a LAN, and therefore don't detect multiple operating systems anomalies. Further, such host-based intrusion detection systems consume CPU power and memory resources at the hosts, and are difficult to manage, upgrade, etc. The known host-based intrusion detection systems are therefor not very suitable for use in an access network where a substantial large number of access subscriber (up to a few thousand DSL subscribers connected to a single DSLAM for instance), typically running different operating systems on their PCs, are connected to an access multiplexer.

An object of the present invention therefor is to provide an intrusion detection system which is easier to manage and update, which enables to detect multiple operating systems anomalies and, which reduces power and resource consumption at the subscriber end.

According to the present invention, this object is realized by integrating a remote host-based intrusion detection system in an access multiplexer, like a DSLAM, DLC or PON OLT, as defined by claim 1.

Indeed, the remote host-based intrusion detection system integrated in the access multiplexer according to the present invention serves considerably more users than traditional host-based intrusion detection systems, as it analyzes systems integrity and statistical behavior of up to a few thousand subscribers. Note that the access subscribers individually may be asked upfront (e.g. at connection setup) to approve that the remote host-based intrusion detection system monitors and audits their files and systems. The remote host-based intrusion detection system typically operates at the higher layers (application layer of the protocol stack), has the ability to detect multiple operating systems anomalies and can correlate rare events faster thanks to its "central" location in the access network. The remote host-based intrusion detection system according to the present invention further saves CPU power and memory resources at the subscribers, and is easier to manage, update, etc., as a result of its "central" location.

An additional feature of the access multiplexer according to the present invention is defined by claim 2.

Thus, by integrating also network-based intrusion detection capabilities in the access multiplexer, both the host and network based intrusion detectors form part of the same box and can easily interwork to even better protect users. The network-based intrusion detection system typically operates at the lower layers of the protocol stack (the physical, link and network layers) by monitoring all traffic for malicious patterns, and protects all access subscribers connected to the access multiplexer, as the access provider won't leave the subscribers the option to switch on / switch off the network-based intrusion detector. Once a new malicious attack on one or more users is detected, the knowledge database of the system is immediately updated in order to protect all subscribers. An access multiplexer according to the invention, having also a network-based intrusion detection function enables access service providers such as DSL providers to offer a complete security service to their subscribers.

Another optional feature of the access multiplexer according to the present invention is defined by claim 3.

Indeed, by building a user-profile database, the remote host-based intrusion detection system integrated in the access multiplexer according to the present invention can offer a customizable protection service to the different users, and can monitor the behavior of these users to detect anomalies.

Yet another optional feature of the access multiplexer according to the current invention is defined by claim 4.

Hence, once an attack against one access subscriber is detected by the remote host-based intrusion detection system or the network-based intrusion detection system, the system will prevent the other access subscribers from the attack.

The above mentioned and other objects and features of the invention will become more apparent and the invention itself will be best understood by referring to the following description of an embodiment taken in conjunction with the accompanying drawings wherein:
Fig. 1 illustrates intrusion detection as implemented in a sample prior art system; and
Fig. 2 depicts a DSL access network including an embodiment of the access multiplexer (DSLAM) according to the present invention.

In the prior art network depicted in Fig. 1, hosts H1, H2, H3 and H4 as well as a first centralized host-based intrusion detection system CHIDS1 form part of a first network segment NS1; similarly hosts H5, H6, H7 and H8 as well as a second centralized host-based intrusion detection system CHIDS2 form part of a second network segment NS2. Both network segments NS1 and NS2 are coupled to a public network (NETWORK in Fig. 1) via a network-based intrusion detection system NIDS.

The first and second network segments, NS1 and NS2, for instance are corporate LANs (Local Area Networks) wherein the hosts, H1, H2, H3, H4, H5, H6, H7 and H8, represent personal computers, e.g. desktops or laptops. The first and second centralized host-based intrusion detection systems, CHIDS1 and CHIDS2, are software applications like *the Symantec Host Intrusion Detection System 4.0 from Unipalm (advertised at http:*//*www.unipalm.co.uk*/*products*/*e-security*/*symantec*/*host-intrusion-detection-system.cfm),* downloaded and installed on a network server to each serve the small amount of PCs in the respective LANs NS1 and NS2. The first centralized host-based intrusion detection system CHIDS1 for instance monitors incoming and outgoing traffic for the hosts H1, H2, H3 and H4, and observes the behavior of these hosts for deviation from normal or expected activity from these hosts, in order to detect security breaches and unauthorized activity. The administrator of the first LAN NS1 has the ability to customize the security and intrusion detection policy for the hosts H1, H2, H3 and H4 from the single server or administrative console where the host-based intrusion detection software is run. Similarly, the administrator of the second LAN NS2 can deploy intrusion detection policies centrally for the hosts H5, H6, H7 and H8, and is able to collect and audit the archives of these hosts.

The network-based intrusion detection system NIDS is incorporated in a box placed behind the firewalls guarding the enterprise LANs. It scans the traffic to and from the network segments NS1 and NS2 for certain patterns and collects events data in order to detect for instance (known) signature based security attacks. Thereto, the intercepted packets are analyzed by comparison with a database of known signatures. Various implementations are known for network-based intrusion detection, ranging from the traditional spanning ports (a switch port analyzer connected to a span port of a switch which is given instructions to send copies of the network traffic to that span port), over taps (special purpose hardware devices that split the network traffic, sending one branch to the destination and the other to the intrusion detector), to hubs, or even switch built-in wire-speed intrusion sensors.

Because of the distributed implementation of host-based intrusion detection, spread over CHIDS1 and CHIDS2, detection of multiple operating systems anomalies is impossible in the prior art situation illustrated by Fig. 1. Further, this implementation of host-based intrusion detection consumes CPU power and memory resources in the two LANs NS1 and NS2, and in some cases requires upgrades at both CHIDS1 and CHIDS2 whenever the host-based intrusion detection has to be updated. Further, the host-based intrusion detection and network-based intrusion detection are two complementary but distinct solutions without interworking in the Fig. 1 prior art.

It is clear that in prior art systems where the host-based intrusion detection is not centralized per LAN, but has to be run on each individual host, the above drawbacks are even worse. In access networks such as ADSL networks, most users are non-corporate users having a single personal computer connected via an ADSL modem and twisted pair copper to the access multiplexer of the DSL service provider. In such configuration, the host-intrusion detection software would run on each individual host, consuming power and resources at all hosts, and rendering updates even more difficult.

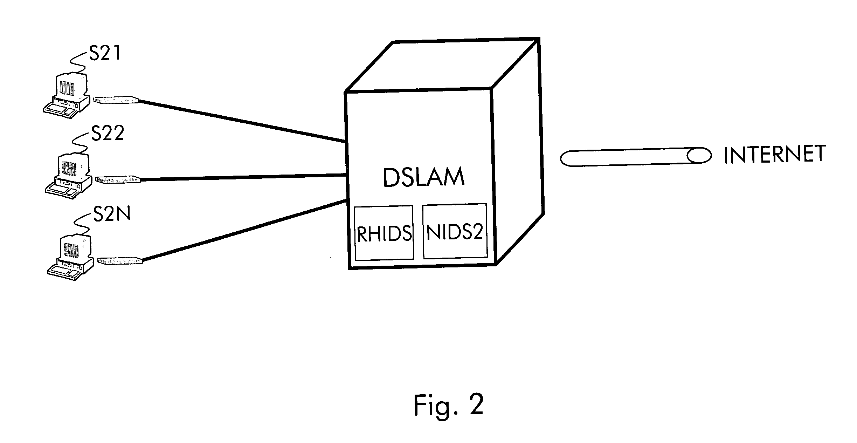

In the access network drown in Fig. 2, the ADSL access subscribers S21, S22 ... S2N are connected via twisted pair copper telephone wires to the Digital Subscriber Line access multiplexer DSLAM, which aggregates downstream and upstream traffic towards a public network like the Internet (INTERNET in Fig. 1).

The ADSL subscribers S21, S22 ... S2N have personal computers either with an external or internal DSL CPE (Customer Premises Equipment) device such as an ADSL modem or ADSL router, and eventual splitters. The DSLAM contains the traditional access concentrating functionality in order to allow it to serve a substantial number of DSL access subscribers, typically a few hundred up to a few thousand DSL access subscribers, and further incorporates a remote host-based intrusion detection system RHIDS and a network-based intrusion detection system NIDS2.

The remote host-based intrusion detection system RHIDS collects statistical information from the DSL subscribers and uses the information to detect protocol anomaly based attacks. It has the ability to detect multiple operating systems anomalies, and to correlate rare events on different subscribers faster. Once an attack against one subscriber has been detected, it will prevent other subscribers from the attack. The remote host-based intrusion detection system RHIDS further has the capability to build a user-profile database so that users don't have to worry any longer about security issues.

Although this is not necessary, the preferred embodiment of the invention integrates a network intrusion detection system NIDS2 together with the remote host-based intrusion detection system RHIDS in the DSLAM, resulting in a complete intrusion detection system in a single box. The network-based intrusion detection system NIDS2 has as a task to scan the traffic for certain patterns for instance to detect (known) signature based attacks on a plurality of DSL subscribers.

A DSLAM according to the invention enables a DSL provider to offer to its subscribers a security service which does not consume CPU power and memory resources of the DSL subscriber, and which is easy to manage and update, e.g. in case new rules have to be added.

Although reference was made above to ADSL (Asymmetric Digital Subscriber Line) technology used for transmission over twisted pair telephone lines, any skilled person will appreciate that the present invention can be applied with same advantages in other DSL (Digital Subscriber Line) systems such as VDSL (Very High Speed Digital Subscriber Line), SDSL (Synchronous Digital Subscriber Line) systems, HDSL (High Speed Digital Subscriber Line) systems, and the like or in a cable based, a fiber based or a radio based access system, where an access multiplexer concentrates the traffic from and to a substantial amount of access subscribers. Thus the access multiplexer could alternatively be a PON OLT (Passive Optical Network Line Termination), a mini-DSLAM or fiber-fed remote cabinet serving a smaller amount of ADSL or VDSL subscribers, a DLC (Digital Loop Carrier), etc.

Furthermore, it is remarked that an embodiment of the present invention is described above rather in functional terms. From the functional description, it will be obvious for a person skilled in the art of designing hardware and/or software solutions for networks how embodiments of the invention can be manufactured.

While the principles of the invention have been described above in connection with specific apparatus, it is to be clearly understood that this description is made only by way of example and not as a limitation on the scope of the claims.

## Claims

1. Access multiplexer (DSLAM) for connecting access subscribers (S21, S22 ... S2N) to a communications network (INTERNET),
**CHARACTERIZED IN THAT** said access multiplexer (DSLAM) comprises remote host-based intrusion detection means (RHIDS), adapted to detect malicious activity on a large amount of said access subscriber by remotely analyzing systems integrity and/or statistical behaviors of said large amount of access subscribers.

2. Access multiplexer (DSLAM) according to claim 1,
**CHARACTERIZED IN THAT** said access multiplexer (DSLAM) further comprises network-based intrusion detection means (NIDS2), adapted to detect malicious activity on all said access subscribers by analyzing incoming and outgoing traffic for attack signature patterns.

3. Access multiplexer (DSLAM) according to claim 1 or claim 2,
**CHARACTERIZED IN THAT** said remote host-based intrusion detection means (RHIDS) are adapted to store user-profiles for respective groups of said access subscribers.

4. Access multiplexer (DSLAM) according to claim 1 or claim 2,
**CHARACTERIZED IN THAT** said access multiplexer (DSLAM) further comprises intrusion prevention means, adapted to prevent said access subscribers (S21, S22 ... S2N) from intrusion when intrusion detection means (RHIDS, NIDS2) detect an anomaly.

5. Access multiplexer (DSLAM) according to claim 1 or claim 2,
**CHARACTERIZED IN THAT** said access multiplexer (DSLAM) is a Digital Subscriber Loop Access Multiplexer.

6. Access multiplexer according to claim 1 or claim 2,
**CHARACTERIZED IN THAT** said access multiplexer is Digital Loop Carrier (DLC).

7. Access multiplexer according to claim 1 or claim 2,
**CHARACTERIZED IN THAT** said access multiplexer is Passive Optical Network Line Termination (PON OLT).
